# EUROPEAN PATENT SPECIFICATION

(11) **EP 2 999 683 B1**
(45) Date of publication and mention of the grant of the patent: **19.07.2017**
(21) Application number: 14731078.3
(22) Date of filing: 20.05.2014
(51) Int. Cl.: C06B 47/00, C06B 47/02, C06D 5/08, F02K 9/42

(54) **OXIDIZER-RICH LIQUID MONOPROPELLANTS FOR A DUAL MODE CHEMICAL ROCKET ENGINE**
OXIDIERUNGSMITTELREICHE FLÜSSIGE MONOTREIBSTOFFE FÜR EINEN CHEMISCHEN DOPPELMODUS-RAKETENMOTOR
MONOERGOLS LIQUIDES RICHES EN COMBURANT DESTINÉS À UN MOTEUR-FUSÉE À PROPULSION CHIMIQUE BIMODE

(30) Priority: 20.05.2013 SE 1350612
(43) Date of publication of application: 30.03.2016
(73) Proprietor: ECAPS Aktiebolag, 171 04 Solna (SE)
(72) Inventor: ANFLO, Kjell, S-136 73 Haninge (SE); THORMÄHLEN, Peter, S-172 62 Sundbyberg (SE)
(74) Representative: Brann AB
(86) International application number: PCT/SE2014/050617
(87) International publication number: WO 2014/189450

(56) References cited:
- EP-A2- 1 477 663
- WO-A2-2012/166046
- US-A1- 2004 231 765
- US-A1- 2009 266 049
- US-B1- 6 254 705
- US-B1- 6 272 846
- ANDERS LARSSON ET AL: "Green Propellants Based on Ammonium Dinitramide (ADN)", ADVANCES IN SPACECRAFT TECHNOLOGIES, INTECH, PAGE(S) 139 - 156 , 1 February 2011 (2011-02-01), XP002686703, ISBN: 978-953-307-551-8 Retrieved from the Internet: URL:http://www.intechopen.com/books/advanc es-in-spacecraft-technologies/green-propel lants-based-on-ammonium-dinitramide-adn- [retrieved on 2012-11-07]

## Description

### Field of the invention

The subject invention relates to oxidizer-rich liquid monopropellants based on ADN or HAN for a dual mode bipropellant chemical rocket engine. Such engines may be part of propulsion systems to be used in aerospace applications for 1) orbit raising, orbit manoeuvres and maintenance, attitude control and deorbiting of spacecraft, and/or 2) propellant settling, attitude and roll control of missiles, launchers and space planes.

### Background of the invention

Dual mode rocket propulsion systems and dual mode rocket engines (also referred to as thrusters) are known in the art. Currently, many spacecraft use dual-mode propulsion systems, with bipropellant engines for larger thrust operations, and monopropellant engines for smaller thrust or when minimum impulse bit is important. In the art the choice of propellants which are suitable in both bipropellant and monopropellant engines are limited to a few very hazardous propellants. Such bipropellants comprise hydrazine or a derivative thereof, such as monomethyl hydrazine (MMH) and unsymmetrical dimethyl hydrazine (UDMH). An example of a dual mode thruster is a thruster referred to as a Secondary Combustion Augmented Thruster (SCAT). A bipropellant dual mode rocket propulsion system comprising a bipropellant thruster having dual mode capability (i.e. ability to operate either in monopropellant mode or in bipropellant mode) has been described in e.g. US 6,135,393, wherein hydrazine is used as the fuel, and, preferably, nitrogen tetroxide (NTO) as the oxidizer.

The mission requirements for a particular propulsion system requiring high performance are defined by a set of figures of merit. One of the most important figures of merit is specific impulse (*I*_{*s*p}) as it indicates the maximum velocity changes that the spacecraft can achieve, which is the very objective of such propulsion system. Specific impulse is defined as the thrust developed by an engine per unit of propellant mass flow rate. If the thrust is measured in Newton (N) and the flow rate is measured in kilograms (kg) per second (s), then the unit of measurement of specific impulse is Ns/kg. For medium to large spacecraft with requirements of significant velocity changes this is the most important parameter. For small spacecraft where dimensions may be limiting, the density impulse, i.e. Ns per propellant volume, may be the dominant figure of merit. Another figure of merit is the thrust of a rocket engine as it determines how long a maneuver will take and what acceleration it will provide. Yet another parameter is the smallest or minimum impulse bit (Ns) that the engine can generate as it determines how precise a maneuver can be performed.

Both hydrazine (fuel) and nitrogen tetroxide (oxidizer), and their derivatives are extremely hazardous for humans as they are highly toxic, carcinogenic, corrosive, etc., and they are associated with significant concerns regarding the severe impact on the environment that they can cause in the case of spillage and emissions Therefore, the handling thereof and the safety requirements are extremely demanding, time consuming and costly.

The ECHA (European Chemicals Agency) has within REACH (Registration, Evaluation, Authorisation and restriction of Chemicals), which is the European Community Regulation on chemicals and their safe use, identified hydrazine as a substance of very high concern which may lead to that hydrazine may be banned for use in new development. Clean Space, which is an initiative by the European Space Agency (ESA), also calls for substituting conventional hazardous propellants.

There is also a new law, Space Operations Act, in France, with respect to space debris, which requires that the spacecraft shall be deorbited when no longer in use.

A significant achievement in the art is the feasibility to substitute hydrazine as a monopropellant for many space applications. This has been successfully demonstrated using the HPGP® technology comprising the LMP-103S monopropellant blend (described in WO 2012/166046) and corresponding thrusters (disclosed in e.g. WO 02/095207) ranging from typically 0.5 N to 200 N. A 1 N HPGP® propulsion system has been operational for several years in an earth orbit in space on the main PRISMA satellite.

Accordingly, it is therefore desirable to provide a propellant enabling a dual mode propulsion system avoiding the use of hydrazine, nitrogen tetroxide, and derivatives thereof. However, so far, no viable rocket propulsion systems, rocket engines, and corresponding alternative propellants with performance comparable to the prior art hazardous hydrazine propellants have been realized.

### Summary of the invention

The present inventors have developed a low-hazard oxidizer-rich liquid monopropellant consisting of 70-90% of an oxidizer selected from ADN and HAN; 0-8% ammonia, and; balance water, which can be used in bipropellant mode operation in a chemical rocket engine in combination with a low-hazard fuel-rich liquid monopropellant.

Consequently, in a first aspect the invention relates to an oxidizer-rich liquid monopropellant based on ADN or HAN.

A suitable engine has been disclosed in applicant's co-pending applications SE 1350612-6 and International patent application entitled "Dual mode chemical rocket engine and dual mode propulsion system comprising the rocket engine".

In another aspect the invention relates to the use of the inventive oxidizer-rich liquid monopropellant in a rocket engine in bipropellant operation together with a fuel-rich liquid monopropellant based on ADN or HAN.

In yet an aspect the invention refers to a method of decomposing the inventive oxidizer-rich liquid monopropellant for the generation of thrust, wherein the oxidizer-rich liquid monopropellant is injected into a flow of hot fuel-rich gas obtained from the decomposition of a fuel-rich liquid monopropellant, so that the oxidizer-rich liquid monopropellant thereby is decomposed and combusted along with the fuel-rich gas, to increase the thrust.

In a related aspect the present invention relates to a method of generating thrust, wherein the inventive oxidizer-rich liquid monopropellant is injected into a flow of hot fuel-rich gas obtained from decomposition of a fuel-rich liquid monopropellant, so that the oxidizer-rich liquid monopropellant thereby is decomposed and combusted along with the fuel-rich gas.

The inventive oxidizer-rich liquid monopropellant can be used to improve, in bipropellant operation mode, the performance of existing fuel-rich liquid ADN based monopropellants, such as LMP-103, LMP-103S, and FLP-106 (having the composition of 64.6 % by weight of ADN, 23.9 % by weight of water; and 11.5 % by weight of MMF (N-methyl-formamide, aka mono-methyl-formamide), and existing fuel-rich liquid HAN based monopropellants.

Using the inventive storable low-hazardous oxidizer-rich liquid monopropellant together with a fuel-rich liquid monopropellant in bipropellant mode operation in a suitable dual mode chemical rocket engine, a propulsion system with comparable performance (i.e. in terms of total impulse for a given system mass) to the prior art dual mode chemical propulsion systems can be achieved while avoiding the use of the prior art hazardous propellants.

A major advantage of the oxidizer-rich liquid monopropellant of the invention is that it does not require a catalyst bed for the decomposition of the oxidizer-rich liquid monopropellant. For the decomposition of the fuel-rich monopropellant existing and well proven catalysts and catalyst beds currently used for the fuel-rich monopropellants can be used with the present invention.

The invention provides an enabling technology for substituting the conventional dual mode and bipropellant rocket propulsion systems using highly hazardous storable liquid propellants with a significantly reduced hazard and environmentally benign alternative propellants system with comparable performance, and will also significantly reduce and facilitate propellant handling and fuelling operations.

In the present invention the term "monopropellant" has been used to denote monopropellants which are composed of more than one chemical compound, such as LMP-103S, which thus could be regarded a monopropellant blend.

Further advantages and embodiments will be apparent from the following detailed description and appended claims.

### Brief description of the attached drawings

FIG 1 shows a suitable dual mode chemical rocket engine wherein the inventive oxidizer may be used.
FIG 2 shows a partial enlargement of means for injection 125 of the inventive oxidizer-rich monopropellant.

### Detailed description

The inventive oxidizer-rich monopropellant consists of 70-90% of ADN or HAN, 0-8% ammonia, and balance water.

According to the present invention the inventive oxidizer-rich monopropellant is used for further combusting, in a second reaction stage, fuel-rich gasses obtained from combustion of a fuel-rich monopropellant, such as a conventional ADN-based or HAN-based liquid monopropellant. The inventive liquid oxidizer-rich monopropellant is thus intended for use in bipropellant operation in a chemical rocket engine together with the fuel-rich liquid monopropellant.

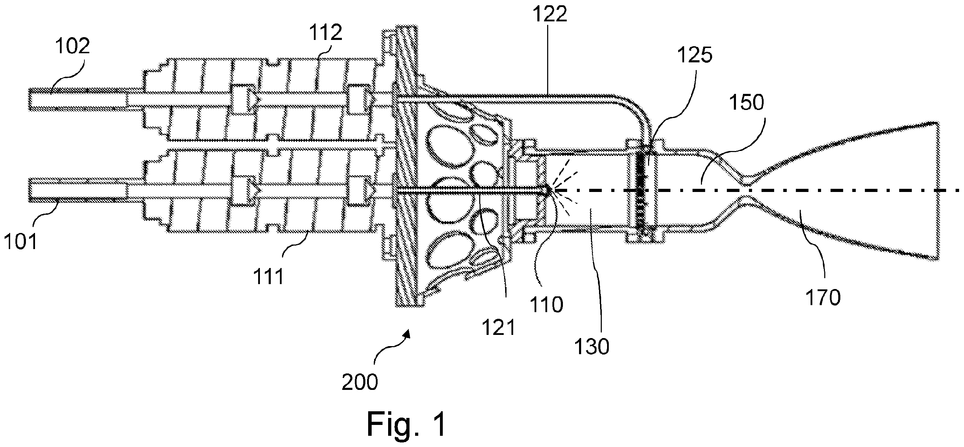

As illustrated in FIG.1 a suitable engine capable of operating in bipropellant mode may comprise a primary reaction chamber **130** for a fuel-rich monopropellant, and a secondary reaction chamber **150** for the decomposition of the inventive oxidizer-rich propellant, wherein the primary reaction chamber is connected to the secondary reaction chamber so that fuel-rich gas from the decomposition of the fuel-rich oxidizer in the primary reaction chamber can flow into the second reaction chamber.

The inventive oxidizer-rich monopropellant is injected into the secondary reaction chamber **150** via means for injection **125**, e.g. an injector.

In such engine the catalyst in the primary reaction chamber would be the life limiting element of the thruster, when exposed to the reactive decomposition and combustion species and operated at higher temperatures than their current design limits. By injecting the oxidiser-rich monopropellant into a secondary reaction chamber, wherein the fuel-rich gas exiting the first reaction chamber is further combusted by means of the presence of the oxidizer-rich monopropellant, the temperature in the secondary reaction chamber can be significantly increased, while the temperature of the catalyst in the primary reactor can be kept essentially unaffected. Accordingly, existing and well proven catalysts and catalyst beds currently used for the specific fuel-rich monopropellant can be used in the primary reactor of such engine. The primary reactor can be based on similar reactor design as conventional reactors for ADN based and HAN based liquid monopropellants, respectively, as currently used in corresponding liquid ADN and HAN monopropellant thrusters, respectively.

Thus, with the inventive oxidizer-rich monopropellant, existing technology can be used for combustion of the corresponding fuel-rich monopropellant, especially ADN monopropellant and HAN monopropellant technology, respectively.

It is generally preferred that the fuel-rich monopropellant blends, and oxidizer-rich monopropellant blends, respectively, be based on ADN.

In preferred embodiments the inventive oxidizer-rich monopropellant is to be used with a fuel-rich, liquid, aqueous ADN based monopropellant, such as e.g. LMP-103, LMP-103S, and FLP-106, especially LMP-103S.

The inventive oxidizer-rich monopropellant is formulated so as to maximize, in bipropellant mode, the attainable combustion of fuel-rich gasses exiting the first reactor. In principle, this means that the inventive oxidizer rich monopropellant will be formulated so that the overall composition of the fuel-rich monopropellant and the oxidizer-rich monopropellant will correspond to the maximum obtainable Iₛₚ of that overall composition.

According to calculations performed with NASA-Glenn Chemical Equilibrium Program CEA2, operation of a chemical rocket engine with the inventive oxidizer rich monopropellant in bipropellant mode would result in an additional improvement of the specific impulse of up to 10% over LMP-103 S, when used as a monopropellant only, which is about 10% lower than the specific impulse of the prior art bipropellant engines operated on the highly hazardous conventional storable propellants, i.e. MMH and NTO. Furthermore, the density impulse of MP-103S and the inventive oxidizer-rich ADN-blend combination will be up to 94% of the density impulse of the prior art bipropellant engine operated on conventional storable propellants.

Preferably, the oxidizer-rich monopropellant blend comprises 70-80% by weight of ADN or HAN. Ammonia is preferably contained in an amount of 1-8% by weight, more preferably 5-8% by weight. The balance up 100% is water.

An especially preferred oxidize-rich ADN based monopropellant for use in the dual mode chemical rocket engine comprises about 77% by weight of ADN, about 17% by weight of water and about 6% by weight of ammonia.

With reference to the engine **200** shown in FIG. 1 the operation and use of the inventive oxidizer will now be described in more detail by way of example.

The rocket engine **200** comprises one inlet port **101** for the fuel-rich monopropellant followed by a series redundant flow control valve **111** and propellant feed tubes **121,** and one inlet port **102** for the oxidizer-rich propellant followed by a series redundant flow control valve **112** and propellant feed tube **122.**

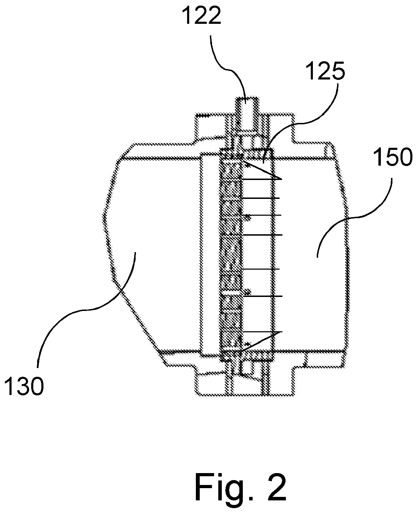

In bipropellant mode, the fuel-rich monopropellant LMP-103S, is injected via injector **110** into the primary reaction chamber **130,** where the propellant is thermo/catalytically decomposed (decomposition of ADN based monopropellants have been disclosed in WO 02/095207) causing an exothermal reaction which produces heat up to about 1,600°C, and a fuel-rich gas which flows into the secondary reaction chamber **150.** The inventive oxidizer-rich monopropellant (a composition of about 77% ADN, about 17% water and about 6% ammonia), is injected by means of a second injector **125** into the secondary reaction chamber **150** downstream of the primary reaction chamber **130.** A partial enlargement of injection means **125** is shown in **FIG. 2****.** In the secondary reaction chamber **150** the inventive oxidizer-rich monopropellant is atomized and decomposed thus generating a surplus of oxygen which mix in the secondary reaction chamber **150** with the fuel rich gases from the primary reaction chamber **130.** A secondary exothermal combustion takes place in secondary reaction chamber, wherein the stagnation gastemperature is significantly further increased up to about 2,300°C which enhances the performance of the engine in terms of fuel efficiency, i.e. specific impulse before the exhaust gases are accelerated through the nozzle **170** thus generating thrust.

While described herein primarily with reference to a dual mode chemical rocket engine, the inventive oxidizer-rich monopropellant could also be used in a similar chemical rocket engine designed for operation only in bipropellant mode.

## Claims

1. An oxidizer-rich liquid monopropellant for use with a fuel-rich liquid monopropellant in a dual mode chemical rocket engine, consisting of: 70-90% by weight of an oxidizer selected from ADN and HAN; 0-8 % by weight of ammonia, and; balance water.

2. The oxidizer-rich liquid monopropellant of claim 1 comprising 1-8 % by weight of ammonia, and preferably 5-8% by weight of ammonia.

3. The oxidizer-rich liquid monopropellant of claim 1 or 2, comprising 70-80% by weight of the oxidizer.

4. The oxidizer-rich liquid monopropellant of any one of the previous claims, wherein the oxidizer is ADN.

5. The oxidizer-rich liquid monopropellant of claim 4, comprising about 77% ADN, about 17% water and about 6% ammonia.

6. The oxidizer-rich liquid monopropellant of any one of claims 1-3, wherein the oxidizer is HAN.

7. A bipropellant combination comprising, stored separately, an oxidizer-rich liquid monopropellant according to one of the previous claims, and, a fuel-rich liquid monopropellant.

8. The bipropellant combination of claim 7, wherein the fuel-rich liquid monopropellant is ADN-based or HAN-based.

9. Use of an oxidizer-rich liquid monopropellant of any one of claims 1-6 in a rocket engine in bipropellant operation together with a fuel-rich liquid monopropellant based on ADN or HAN.

10. A method of decomposing an oxidizer-rich liquid monopropellant of any one of claims 1-6 for the generation of thrust, wherein the oxidizer-rich liquid monopropellant is injected into a flow of hot fuel-rich gas obtained from decomposition of a fuel-rich liquid monopropellant, so that the oxidizer-rich liquid monopropellant thereby is decomposed and combusted along with the fuel-rich gas.

11. A method of generating thrust, wherein an oxidizer-rich liquid monopropellant according to any one of claims 1-6 is injected into a flow of hot fuel-rich gas obtained from decomposition of a fuel-rich liquid monopropellant, so that the oxidizer-rich liquid monopropellant thereby is decomposed and combusted along with the fuel-rich gas.

## Patentansprüche

1. Ein oxidationsmittelreicher flüssiger Monotreibstoff zur Verwendung mit einem brennstoffreichen flüssigen Monotreibstoff in einem chemischen Dualmodus-Raketentriebwerk, bestehend aus: 70 - 90 Gew.-% eines Oxidationsmittels, ausgewählt aus ADN und HAN; 0 - 8 Gew.-% Ammoniak; und Rest Wasser.

2. Der oxidationsmittelreiche flüssige Monotreibstoff nach Anspruch 1, umfassend 1 - 8 Gew.-% Ammoniak, und bevorzugt 5 - 8 Gew.-% Ammoniak.

3. Der oxidationsmittelreiche flüssige Monotreibstoff nach Anspruch 1 oder 2, umfassend 70 - 80 Gew.-% des Oxidationsmittels.

4. Der oxidationsmittelreiche flüssige Monotreibstoff nach einem der vorherigen Ansprüche, wobei das Oxidationsmittel ADN ist.

5. Der oxidationsmittelreiche flüssige Monotreibstoff nach Anspruch 4, umfassend etwa 77 % ADN, etwa 17 % Wasser und etwa 6 % Ammoniak.

6. Der oxidationsmittelreiche flüssige Monotreibstoff nach einem der Ansprüche 1 bis 3, wobei das Oxidationsmittel HAN ist.

7. Eine Bitreibstoffkombination, umfassend, separat gelagert, einen oxidationsmittelreichen flüssigen Monotreibstoff nach einem der vorherigen Ansprüche und einen brennstoffreichen flüssigen Monotreibstoff.

8. Die Bitreibstoffkombination nach Anspruch 7, wobei der brennstoffreiche flüssige Monotreibstoff auf ADN basiert oder auf HAN basiert.

9. Verwendung eines oxidationsmittelreichen flüssigen Monotreibstoffs nach einem der Ansprüche 1 bis 6 in einem Raketentriebwerk im Bitreibstoffbetrieb zusammen mit einem brennstoffreichen flüssigen Monotreibstoff basierend auf ADN oder HAN.

10. Ein Verfahren zum Zersetzen eines oxidationsmittelreichen flüssigen Monotreibstoffs nach einem der Ansprüche 1 bis 6 für die Schuberzeugung, wobei der oxidationsmittelreiche flüssige Monotreibstoff in einen heißen, brennstoffreichen Gasstrom injiziert wird, der aus der Zersetzung eines brennstoffreichen flüssigen Monotreibstoffs erhalten wird, so dass der oxidationsmittelreiche flüssige Monotreibstoff dadurch zersetzt wird und zusammen mit dem brennstoffreichen Gas verbrannt wird.

11. Ein Verfahren zur Schuberzeugung, wobei ein oxidationsmittelreicher flüssiger Monotreibstoff nach einem der Ansprüche 1 bis 6 in einen heißen, brennstoffreichen Gasstrom injiziert wird, der aus der Zersetzung eines brennstoffreichen flüssigen Monotreibstoffs erhalten wird, so dass der oxidationsmittelreiche flüssige Monotreibstoff dabei zersetzt wird und zusammen mit dem brennstoffreichen Gas verbrannt wird.

## Revendications

1. Monergol liquide riche en oxydant pour une utilisation avec un monergol liquide riche en carburant dans un moteur de fusée chimique bimode, constitué par : de 70 à 90 % en poids d'un oxydant choisi parmi l'ADN et l'HAN ; de 0 à 8 % en poids d'ammoniac ; et le reste d'eau.

2. Monergol liquide riche en oxydant selon la revendication 1, comprenant de 1 à 8 % en poids d'ammoniac et de préférence de 5 à 8 % en poids d'ammoniac.

3. Monergol liquide riche en oxydant selon la revendication 1 ou 2, comprenant de 70 à 80 % en poids de l'oxydant.

4. Monergol liquide riche en oxydant selon l'une quelconque des revendications précédentes, dans lequel l'oxydant est l'ADN.

5. Monergol liquide riche en oxydant selon la revendication 4, comprenant environ 77 % d'ADN, environ 17 % d'eau et environ 6 % d'ammoniac.

6. Monergol liquide riche en oxydant selon l'une quelconque des revendications 1 à 3, dans lequel l'oxydant est l'HAN.

7. Combinaison de deux propergols comprenant, stockés séparément, un monergol liquide riche en oxydant selon l'une quelconque des revendications précédentes et un monergol liquide riche en carburant.

8. Combinaison de deux propergols selon la revendication 7, dans laquelle le monergol liquide riche en carburant est à base d'ADN ou à base d'HAN.

9. Utilisation d'un monergol liquide riche en oxydant selon l'une quelconque des revendications 1 à 6 dans un moteur de fusée dans un fonctionnement à deux propergols avec un monergol liquide riche en carburant à base d'ADN ou d'HAN.

10. Procédé de décomposition d'un monergol liquide riche en oxydant selon l'une quelconque des revendications 1 à 6 pour générer la poussée, dans lequel le monergol liquide riche en oxydant est injecté dans un flux de gaz riche en carburant chaud obtenu à partir de la décomposition d'un monergol liquide riche en carburant, de sorte que le monergol liquide riche en oxydant est décomposé et brûlé avec le gaz riche en carburant.

11. Procédé de production de la poussée, dans lequel un monergol liquide riche en oxydant selon l'une quelconque des revendications 1 à 6 est injecté dans un flux de gaz riche en carburant chaud obtenu à partir de la décomposition d'un monergol liquide riche en carburant, de sorte que le monergol liquide riche en oxydant est décomposé et brûlé avec le gaz riche en carburant.
